# EUROPÄISCHE PATENTANMELDUNG

(11) **EP 0 635 964 A1**
(43) Veröffentlichungstag der Anmeldung: **25.01.1995**
(21) Anmeldenummer: 94250182.6
(22) Anmeldetag: 19.07.1994
(51) Int. Cl.: H04M 3/00

(54) **Personenbezogene Telefonwahl-Kontrolleinrichtung**

(30) Priorität: 23.07.1993 DE 4325384
(71) Anmelder: EKB Dienstleistungsgesellschaft für Hard- und Software mbH Berlin, D-13409 Berlin (DE)
(72) Erfinder: Skiba, Ralf, D-13465 Berlin (DE); Tietz, Werner, D-13503 Berlin (DE)
(74) Vertreter: Meissner, Peter E., Dipl.-Ing.

(57) **Zusammenfassung**

Es gibt Situationen im privaten oder dienstlichen Bereich, in denen eine Einschränkung des Benutzungsumfanges des Telefon-Endgerätes hinsichtlich bestimmter Teilnehmerbereiche bzw. Rufnummernblöcke für bestimmte Personen gewünscht wird.

Dazu wird eine personenbezogene Telefonwahl-Kontrolleinrichtung angegeben, durch die die Herstellung bestimmter Leitungsverbindungen zugelassen bzw. verhindert werden kann, die erfindungsgemäß dadurch gekennzeichnet ist, daß zwischen der TAE-Anschlußdose (5) und dem Endgerät (10) ein Steuergerät (1), das mit einem Karten-Leser versehen ist, die TAE-Anschlußdose (5) blockierend fest installiert ist und daß das Steuergerät (1) in Abhängigkeit von einer auf der in den Karten-Leser eingesetzten personenbezogenen Karte vorhandenen Programmierung bestimmte Teilnehmerbereiche bzw. Rufnummernblöcke für das daran angeschlossene Endgerät zur Anwahl freigibt bzw. sperrt.

## Beschreibung

Die Erfindung betrifft eine personenbezogene Telefonwahl-Kontrolleinrichtung nach dem Oberbegriff des Hauptanspruchs.

Telefon-Endgeräte sind für jeden beliebigen Benutzer in gleicher Weise in dem Umfang zu benutzen, wie es die zum Einsatz kommende Technik des Endgerätes und der Übertragungsstrecke zuläßt.

Es gibt jedoch Situationen im privaten oder dienstlichen Bereich, in denen eine Einschränkung des Benutzungsumfangs des Telefon-Endgerätes für bestimmte Personen gewünscht wird. So kann das stundenlange Telefonieren der Kinder im Orts- oder Fernbereich zu hohen Gebühren führen und auch der Arbeitgeber kann beabsichtigen, für bestimmte Mitarbeiter die Benutzung des Diensttelefons auf bestimmte Teilnehmerbereiche bzw. Rufnummernblöcke zu beschränken.

Es ist bekannt, das Endgerät selbst in bestimmter Weise zu programmieren. Durch Programmierung lassen sich Klassifizierungen, wie Orts-, Fern- oder Auslandsanschlüsse, am Endgerät vornehmen. Es wird auch an Lösungen gearbeitet, bei denen die Einschränkung in der Vermittlungsstelle durchführbar ist.

Der Mangel dieser Lösungen liegt darin, daß die Einschränkungen dem Anschluß und nicht, wie beabsichtigt, einer bestimmten Person zugeordnet ist. Insofern die Endgeräte mit einem TAE-Stecker an die Leitung angeschlossen sind, ist es darüber hinaus ein leichtes, das programmierte Endgerät gegen ein anderes nichtprogrammiertes Gerät auszutauschen, um dann ungehindert alle möglichen Teilnehmer anrufen zu können. Auch sind die Prozeduren zur Umprogrammierung oftmals allgemein bekannt und durchführbar.

Der Erfindung lag deshalb die Aufgabe zugrunde, eine personenbezogene Telefonwahl-Kontrolleinrichtung zu schaffen, die an der TAE-Anschlußdose fest installiert, d. h. nicht ohne Berechtigung und fachmännischen Eingriff beseitigbar ist und die es ermöglicht, für betimmte Personen bestimmte Einschränkungen hinsichtlich des Benutzungsumfangs einzurichten.

Die Lösung der Aufgabe erfolgt erfindungsgemäß entsprechend des Kennzeichens des Hauptanspruchs. Zweckmäßige Weiterbildungen der erfinderischen Merkmale sind in den Unteransprüchen wiedergegeben.

Durch ein zwischen TAE-Anschlußdose und Endgerät zwischengeschaltetes Steuergerät wird die Verwendbarkeit des Endgerätes gesteuert. Die Ansteuerung erfolgt dabei entsprechend einer in bestimmter Weise programmierten Karte, die der Benutzer des Endgerätes in einen mit dem Steuergerät verbundenen Kartenleser eingibt.
Die personenbezogene Karte trägt die entsprechende Programmierung, mit welchem Teilnehmerbereich die betreffende Person eine telefonische Verbindung herzustellen berechtigt oder nicht berechtigt ist.
Das Steuergerät ist vorteilhafterweise zwei- oder mehrteilig ausgebildet. Das erschließt die Möglichkeit, ein Teil des Steuergerätes fest mit der TAE-Anschlußdose zu verbinden, so daß die Entfernung der Kontrolleinrichtung und der Anschluß eines Endgerätes unmittelbar an der TAE-Anschlußdose ohne berechtigten und fachmännischen Eingriff nicht möglich ist. Dazu kann der Deckel der TAE-Dosenverriegelung mit der Grundplatte des Steuergeräteteils verschraubt und über ein Sicherheitsschloß abgeschlossen werden.

Ein weiteres Teil des Steuergerätes beinhaltet den Karten-Leser und kann je nach Anwendungssituation als Tisch- oder Wandgerät ausgebildet sein. Vorzugsweise ist dieses Teil zusätzlich mit einem Display versehen, das hauptsächlich für die Programmierung benötigt wird, aber auch die wählende Rufnummer anzeigen kann oder zur Gebühreninformation dient.

Es ist eine Hauptkarte vorgesehen, die alle Verbindungen über das Endgerät freigibt. Unter Einsatz dieser Karte sind alle anderen Karten, die eine eingeschränkte Freigabe-Programmierung tragen sollen, beliebig programmierbar. Es kann eine beliebige Anzahl von Karten mit unterschiedlicher Programmierung versehen sein, die auch äußerlich eine voneinander abweichende Gestaltung, z. B. Farbe, aufweisen.

Bei der Programmierung kann es sich auch darum handeln, daß einer Karte ein bestimmter Gebührenwert "gutgeschrieben'' wird, so daß diese wie eine übliche Telefonkarte mit Abzug verbrauchter Gebühren einsetzbar ist.

Einer bestimmten Kontrolleinrichtung ist ein bestimmter Kartensatz durch eine PIN-Codierung fest zugeordnet.
Der Hauptkarte wiederum ist eine TAN-Nummer zugeordnet, die durch den berechtigten Besitzer programmierbar ist.

Die Erfindung soll an einem Ausführungsbeispiel anhand der Zeichnungen näher erläutert werden.

In den Zeichnungen zeigen:

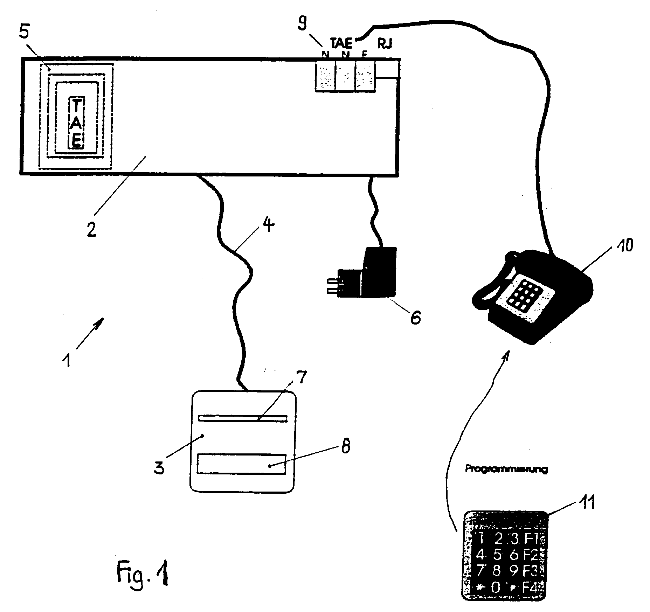

- Fig. 1: : die Prinzipschaltung der erfindungsgemäßen Kontrolleinrichtung
- Fig 2: : die beiden Teile eines zweiteiligen Steuergeräts.

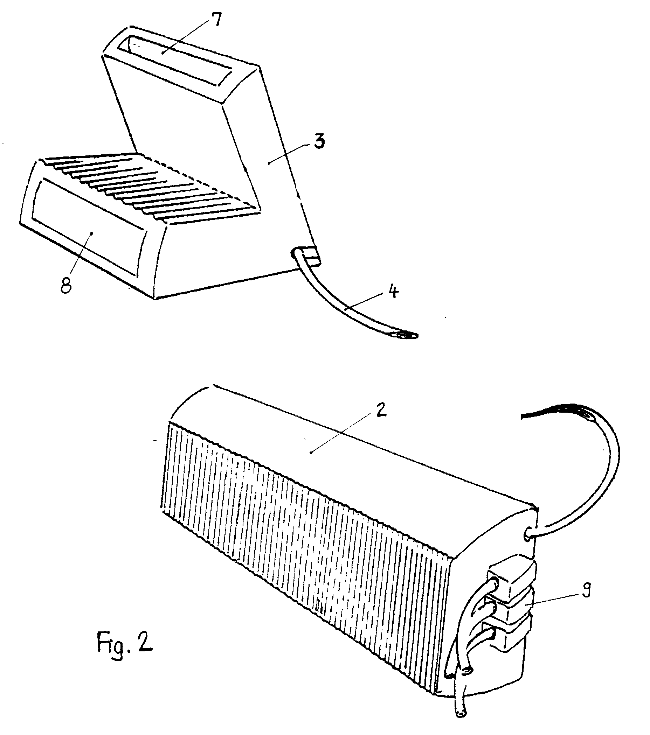

Das Steuergerät 1 besteht in diesem Fall aus einem Basisteil 2, das den Anschluß zwischen TAE-Anschlußdose 5 und Steuergerät blockierend umschließt und einem frei beweglichen Satellit-Teil 3, das mit dem Basisteil 2 über das Kabel 4 elektrisch verbunden ist. Die elektronischen Baugruppen können beliebig in den Teilgeräten (2, 3) verteilt sein. Die Leistungseinspeisung für die Elektronik erfolgt über ein Steckemetzteil 6. Das bewegliche Satellit-Teil 3 enthält den Kartenleser mit dessen Eingabe 7. Auch das Display 8, z. B. 16 Zeichen 5 x 7 Matrix, zur Anzeige der Programmierung, der wählenden Rufnummer oder von Gebühreninformationen ist vorteilhafterweise am Teil 3 angeordnet (Fig. 2).

Am Ausgang 9 des Basisteils 2 sind für den wahlweisen Anschluß des Endgerätes 10 zwei TAE-N, ein TAE-F und ein RJ-Anschluß vorgesehen.

Der Kontrolleinrichtung ist eine Hauptkarte zugeordnet, mit der jeder Teilnehmer angewählt werden kann.
Die Programmierung der weiteren Karten mit jeweils geringerem Benutzungsumfang wird vom Endgerät 10 über einen MFV-Handsender 11 vollzogen. Dabei muß die Hauptkarte eingeführt und die richtige TAN-Nummer eingegeben sein.

Auf diese Weise kann jede andere Karte verändert werden.
Ein Beispiel für die Programmierung der Anlage und die Kennzeichnung der Karten kann sein:

| Karte | Wahlmöglichkeiten |
|---|---|
| ohne | alle Notrufnummern und 10 erlaubte Ziele |
| KUPFER | Sonderdienste, Teleshopping, 00xxx, 0xxx gesperrt |
| BRONZE | Sonderdienste, Teleshopping, 00xxx gesperrt |
| SILBER | Sonderdienste, Teleshopping, etc. gesperrt |
| GOLD | unbegrenzte Wahl |
| CALL FREE | Auf dieser Karte können Gebühreneinheiten gespeichert werden. Mit der goldenen Karte als Berechtigungszugang kann ein beliebiger Gebührenwert "Gut" geschrieben werden. |

## Patentansprüche

1. Personenbezogene Telefonwahl-Kontrolleinrichtung, durch die die Herstellung bestimmter Leitungsverbindungen durch schaltungstechnische Maßnahmen zugelassen bzw. verhindert werden kann, **dadurch gekennzeichnet,**
daß zwischen der TAE-Anschlußdose (5) und dem Endgerät (10) ein Steuergerät (1), das mit einem Karten-Leser versehen ist, die TAE-Anschlußdose (5) blockierend fest installiert ist und daß das Steuergerät (1) in Abhängigkeit von einer auf der in dem Karten-Leser eingesetzten personenbezogenen Karte vorhandenen Programmierung bestimmte Teilnehmerbereiche bzw. Rufnummernblöcke für das daran angeschlossene beliebige Endgerät zur Anwahl freigibt bzw. sperrt.

2. Kontrolleinrichtung nach Anspruch 1, **dadurch gekennzeichnet,**
daß das Steuergerät (1) ein-, zwei- oder mehrteilig ausgebildet ist, wobei ein Basisteil die TAE-Anschlußdose (5) blockierend umschließt und ein anderes mit dem Basisteil (2) über ein Kabel (4) verbundenes frei bewegliches Teil (3) den Karten-Leser enthält und daß die für die Steuerungs- und Anzeigefunktionen verantwortliche Elektronik in den Teilgeräten (2, 3) beliebig verteilt ist.

3. Kontrolleinrichtung nach Anspruch 2, **dadurch gekennzeichnet,**
daß das freibewegliche Teil (3) als Tisch- oder als Wandgerät ausgebildet ist.

4. Kontrolleinrichtung nach Anspruch 3, **dadurch gekennzeichnet,**
daß das frei bewegliche Teil (3) zusätzlich mit einem Display (8) versehen ist.

5. Kontrolleinrichtung nach Anspruch 1, **dadurch gekennzeichnet,**
daß eine beliebige Anzahl von Karten mit unterschiedlicher Programmierung vorgesehen ist, die auch äußerlich eine voneinander abweichende Gestaltung, z. B. Farbe, aufweisen.

6. Kontrolleinrichtung nach Anspruch 1 und 5, **dadurch gekennzeichnet,**
daß eine Hauptkarte vorgesehen ist, die alle möglichen Verbindungen über das Endgerät freigibt und die zur Programmierung jeder beliebigen Karte mit wenige Freigabemöglichkeiten einsetzbar ist.

7. Kontrolleinrichtung nach Anspruch 6, **dadurch gekennzeichnet,**
daß mittels der Hauptkarte auf einer anderen Karte ein bestimmter Gebührenwert einprogrammierbar ist, so daß diese Karte wie eine übliche Telefonkarte einsetzbar ist.

8. Kontrolleinrichtung nach den Ansprüchen 1, 4 und 6 oder 1, 4 und 7,
**dadurch gekennzeichnet,**
daß das Display (8) die Programmierung, die wählende Rufnummer oder die Gebühreninformation anzeigt.

9. Kontrolleinrichtung nach Anspruch 1, **dadurch gekennzeichnet,**
daß ohne Einsatz einer Karte alle Notrufnummern und bestimmte weitere Teilnehmer anwählbar sind.
